(19) Europäisches Patentamt

European Patent Office

Office européen des brevets

(11) **EP 0 608 187 B1**

(12) **FASCICULE DE BREVET EUROPEEN**

(45) Date de publication et mention
de la délivrance du brevet:
**09.04.1997 Bulletin 1997/15**

(51) Int. Cl.⁶: **B25J 9/16**

(21) Numéro de dépôt: **94420015.3**

(22) Date de dépôt: **17.01.1994**

(54) **Procédé de commande hybride position/force pour robot manipulateur**

Verfahren zur hybriden Positions/Kraft-Steuerung für einen Robotermanipulator

Hybrid position/force control procedure for a robotic manipulator

(84) Etats contractants désignés:
**AT BE CH DE DK ES GB GR IE IT LI LU MC NL PT SE**

(30) Priorité: **19.01.1993 FR 9300681**

(43) Date de publication de la demande:
**27.07.1994 Bulletin 1994/30**

(73) Titulaires:
• **POTAIN
F-69130 Ecully (FR)**
• **OFFICE NATIONAL D'ETUDES ET DE
RECHERCHES AEROSPATIALES (ONERA)
92320 Chatillon sous Bagneux (FR)**

(72) Inventeurs:
• **Faure, Serge
F-38200 Chuzelles (FR)**
• **Gaillet, Alain
F-31400 Toulouse (FR)**

• **Lefebvre, Régis,
Résidence parc de Chalin
F-69130 Ecully (FR)**
• **Reboulet, Claude
F-31670 Labege (FR)**

(74) Mandataire: **Bratel, Gérard et al
Cabinet GERMAIN & MAUREAU,
12, rue Boileau,
BP 6153
69466 Lyon Cedex 06 (FR)**

(56) Documents cités:
**DE-A- 3 810 691**

• **IEEE PROCEEDINGS OF THE
SOUTHEASTCON'91 vol. 2 , 1991 pages 880 - 884
CHARLES C. NGUYEN ET AL. 'analysis and
implementation of a 6 dof stewart platform-
based force sensor for passsive compliant
robotic assembly'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de commande hybride position/force pour robot manipulateur à six degrés de liberté du type comprenant un macro-manipulateur couplé à un micro-manipulateur avec préhenseur de charge.

Cette invention s'applique plus particulièrement, mais non exclusivement, à la commande d'un robot manipulateur de grande dimension et de forte capacité pour utilisation en milieu ouvert (milieu extérieur), notamment sur des chantiers, tel que décrit dans le document FR-A - 2 653 761. Un tel robot manipulateur comprend :

- un porteur motorisé, constituant le "macro-manipulateur", à structure élancée (de grande dimension longitudinale et de relativement faible dimension transversale) élastiquement déformable, constitué essentiellement d'un mât orientable autour d'un axe sensiblement vertical et d'un bras articulé au sommet du mât autour d'un axe sensiblement horizontal et réalisé en plusieurs éléments articulés les uns aux autres autour d'axes parallèles au précédent, ce bras étant dépliable et repliable dans le plan vertical passant par l'axe de rotation du mât ;
- un bras compensateur motorisé, constituant le "micro-manipulateur", a structure de faible inertie relativement au porteur, télescopique et orientable, possédant au moins un degré de liberté redondant et équipé d'un porte-préhenseur à détection d'efforts à compliance active, le bras compensateur étant réalisable selon le principe de la plateforme de Stewart (ou tout autre type de manipulateur parallèle) ;
- une liaison motorisée du bras compensateur avec l'extrémité du bras du porteur ;
- des moyens de commande et de contrôle de la motorisation du porteur, du bras compensateur et de la liaison du bras compensateur avec le porteur ;
- des moyens d'alimentation en énergie et de contrôle/commande d'un préhenseur supporté par le porte-préhenseur.

On notera aussi que le porteur et le bras manipulateur d'un tel robot manipulateur comprennent un certain nombre d'actionneurs, qui sont en pratique des moto-réducteurs d'orientation et divers vérins, avec leurs asservissements, ainsi que des capteurs de position, associés à ces actionneurs. Le porteur, autrement dit le macro-manipulateur, est capable d'assurer les grands déplacements, en mettant en oeuvre des asservissements de position. Le bras compensateur, c'est-à-dire le micro-manipulateur, assure les petits déplacements et possède des asservissements de position et d'effort ; il intervient ainsi, en particulier, dans les phases de fonctionnement comportant un contact avec l'environnement. Ainsi, en pratique, dans un cycle de manutention effectué par le robot manipulateur, le bras compensateur intervient notamment au moment de la saisie d'une charge et au moment de la dépose d'une charge. Lors de ces séquences, le contrôle des efforts est en effet essentiel.

En particulier, considérant la séquence de prise d'une charge, par exemple posée initialement sur le sol, il convient de transférer tout le poids de la charge depuis le sol vers le robot, avec mise en tension du robot, sans déplacement du préhenseur, ce qui implique :

- d'agir sur le porteur pour compenser progressivement sa déformée, c'est-à-dire l'ensemble de ses déplacements en translation et en rotation dans l'espace, en fonction de sa configuration et de son état de charge ;
- d'agir sur le bras compensateur pour maintenir le préhenseur en position, jusqu'au décollage de la charge.

Le problème se pose en des termes similaires dans la séquence de dépose de la charge, avec détensionnement (modification de l'état des contraintes internes) du robot, où il convient de transférer tout le poids de la charge depuis le robot vers le plan de dépose, sans déplacement de cette charge.

Le contrôle des efforts intervient également lors de l'activation de certains modes de fonctionnement du robot, et plus généralement, la commande hybride position/force doit permettre le contrôle selon certains degrés de liberté de la position du préhenseur du robot, tout en contrôlant, selon les degrés de liberté complémentaires, les efforts que ce préhenseur exerce sur l'environnement. Pour mémoire, on rappelle ici que le nombre total de degrés de liberté est égal à 6, et la commande hybride position/force consiste à contrôler N degrés de liberté en force, et les (6-N) autres degrés de liberté en position. Dans ce contexte, "position" signifie aussi bien "position d'un point" que "orientation", tandis que "force" signifie aussi bien "effort" que "couple". On considérera aussi que, dans une commande hybride, le robot interprète et exécute des macro-commandes (ou primitives), qui sont des fonctions pré-définies, en relation avec les tâches à effectuer. Par exemple, dans une séquence de dépose d'une charge, la macro-commande peut impliquer l'asservissement en force selon trois degrés de liberté, et l'asservissement en position selon les trois degrés de liberté complémentaires. La commande hybride fait aussi appel à divers repères fonctionnels, notamment un repère attaché au pied du robot, un repère attaché à la base du bras compensateur (ou à la partie terminale du porteur), un repère attaché au plateau mobile du compensateur, un repère "tâche" fixe par rapport à l'environnement, et un repère lié à la charge à manipuler. Compte tenu de la structure du porteur et du bras manipulateur, on définit aussi le "modèle géométrique inverse" du porteur, ainsi que le "modèle géométrique inverse" du bras compensateur, c'est-à-dire les relations qui, pour chaque position du porteur ou du bras compensateur exprimée en coordonnées cartésiennes, définissent les consignes correspondantes à envoyer aux articulations du robot, qu'on appellera plus simplement les "consignes articulaires".

Les réflexions auxquelles se sont livrés les Inventeurs les ont conduits à envisager, pour la prise et la dépose des charges, suivant l'axe vertical, quatre stratégies différentes dans lesquelles, respectivement :

- le porteur seul joue un rôle actif ;
- le bras compensateur seul joue un rôle actif ;
- le porteur et le bras compensateur sont actifs de façon séquentielle ;
- le porteur et le bras compensateur sont actifs simultanément.

La dernière stratégie s'est avérée la plus avantageuse, notamment pour pouvoir limiter les déplacements du bras compensateur par rapport à sa position médiane, un déplacement du porteur pouvant intervenir si la position instantanée du compensateur s'écarte excessivement de sa position médiane, d'où une limitation du dimensionnement du bras compensateur. Un autre avantage est la possibilité de descendre une charge derrière un obstacle et de rechercher le contact en "aveugle", c'est-à-dire sans avoir connaissance a priori du niveau exact du sol ou du plan de dépose.

Le procédé de commande selon l'invention se place donc dans le cadre de cette dernière stratégie, et il vise principalement à déterminer la répartition des mobilités entre le porteur et le bras compensateur ou, en généralisant le problème et sa solution, entre le macro-manipulateur et le micro-manipulateur.

Le document DE-A-3810691 décrit un système de robot manipulateur à six degrés de liberté, du type indiqué dans le préambule de la revendication 1 c'est-à-dire comprenant un macro-manipulateur couplé à un micro-manipulateur avec préhenseur de charge, ces manipulateurs mettant en oeuvre des capteurs de force et de position, des actionneurs et des moyens d'asservissement des actionneurs à partir de consignes et de valeurs réelles fournies par les capteurs. Toutefois, ce document ne fournit aucune solution générale concernant les consignes à introduire, et il ne décrit pas une véritable commande hybride, au sens de la présente invention. De plus, le document DE-A-3810691 n'envisage pas le problème de la compensation de la "déformée" du macro-manipulateur, qui concerne plus spécialement les robots manipulateurs de grande dimension et de forte capacité.

Le but de l'invention est atteint, grâce à un procédé selon le préambule de la revendication 1, procédé caractérisé en ce que :

- on introduit N consignes de force de contact du préhenseur ou de la charge avec l'environnement et (6-N) consignes de position du préhenseur, correspondant respectivement aux six degrés de liberté de l'espace ;
- toutes ces consignes sont comparées à des valeurs réelles fournies par des capteurs respectifs de force et de position, et produisent ainsi des valeurs d'écart,
- les valeurs d'écart sont traduites en incréments de déplacement destinés au préhenseur de charge,
- les incréments de déplacement sont additionnés à des valeurs représentatives de la position actuelle, pour constituer de nouvelles consignes de position du préhenseur de charge,
- les nouvelles consignes de position du préhenseur de charge, en tenant compte de la position réelle du macro-manipulateur et de sa déformée, sont affectées au micro-manipulateur,
- ces nouvelles consignes de position sont traduites, par un transformateur de coordonnées, en consignes articulaires destinées aux asservissements des actionneurs du micro-manipulateur,
- des consignes de position virtuelles, tenant compte de la déformée et de la position initiale du macro-manipulateur, sont adressées au macro-manipulateur,
- ces consignes virtuelles sont réparties en consignes de position effectivement adressées au macro-manipulateur, d'une part, et en consignes non réalisables par le macro-manipulateur qui sont adressées au micro-manipulateur, d'autre part,
- les consignes de position effectivement adressées au macro-manipulateur sont traduites, par un transformateur de coordonnées, en consignes articulaires destinées aux asservissements des actionneurs du macro-manipulateur.

Ainsi, ce procédé de commande hybride tient compte du fait que tous les degrés de liberté ne sont pas autorisés pour le macro-manipulateur, ce qui est le cas du porteur dans l'application particulière ici considérée pour exposer le problème. On notera aussi qu'avec le procédé selon l'invention, ce n'est qu'après avoir reconstitué la position désirée du préhenseur de charge que l'on réalise la répartition des consignes entre le macro-manipulateur et le micro-manipulateur. On fait ici exécuter au micro-manipulateur les déplacements correctifs destinés à annuler les écarts d'asservissement des consignes hybrides, tout en corrigeant de manière indépendante la position du macro-manipulateur à partir des déformées. Il est à noter que les déformées peuvent être introduites à partir d'un tableau de valeurs préalablement mémorisées, ou par l'intermédiaire de calculs (modèle mathématique).

Selon un mode de mise en oeuvre du procédé selon l'invention, les consignes adressées au macro-manipulateur sont établies de telle sorte que le macro-manipulateur occupe une position constante dans l'espace, au cours d'une séquence de prise ou de dépose de charge.

Dans une variante de ce procédé, les consignes adressées au macro-manipulateur sont établies de telle sorte que le macro-manipulateur occupe une position réajustable, au cours d'une séquence de prise ou de dépose d'une charge, de manière à réduire l'écart entre la position réelle et la position médiane du micro-manipulateur.

L'invention englobe aussi l'application industrielle particulière du procédé de commande hybride position/force, ci-dessus défini, à un robot manipulateur de grande dimension et de forte capacité pour utilisation en milieu ouvert avec porteur motorisé constitué d'un mât orientable et d'un bras dépliable en plusieurs éléments articulés les uns aux autres, et avec, à l'extrémité du bras dépliable, un compensateur motorisé équipé d'un porte-préhenseur à détection d'efforts à compliance active, dans lequel le porteur constitue le macro-manipulateur et le compensateur constitue le micro-manipulateur, le procédé assurant ici la répartition des mobilités entre le porteur et le compensateur, en contrôlant les efforts de contact au cours des séquences de prise et de dépose d'une charge.

De toute façon, l'invention sera mieux comprise à l'aide de la description qui suit, en référence au dessin schématique annexé illustrant, à titre d'exemple non limitatif, quelques modes de mise en oeuvre de ce procédé, en relation avec une application particulière :

Figure 1 est une vue d'ensemble, en perspective, d'un robot manipulateur pouvant être commandé par le procédé objet de l'invention ;

Figure 2 est une vue schématisant le robot manipulateur de figure 1 avec les repères associés ;

Figure 3 est un schéma de principe de la commande hybride position/force selon l'invention ;

Figure 4 est un schéma plus détaillé illustrant la répartition des mobilités dans ce procédé.

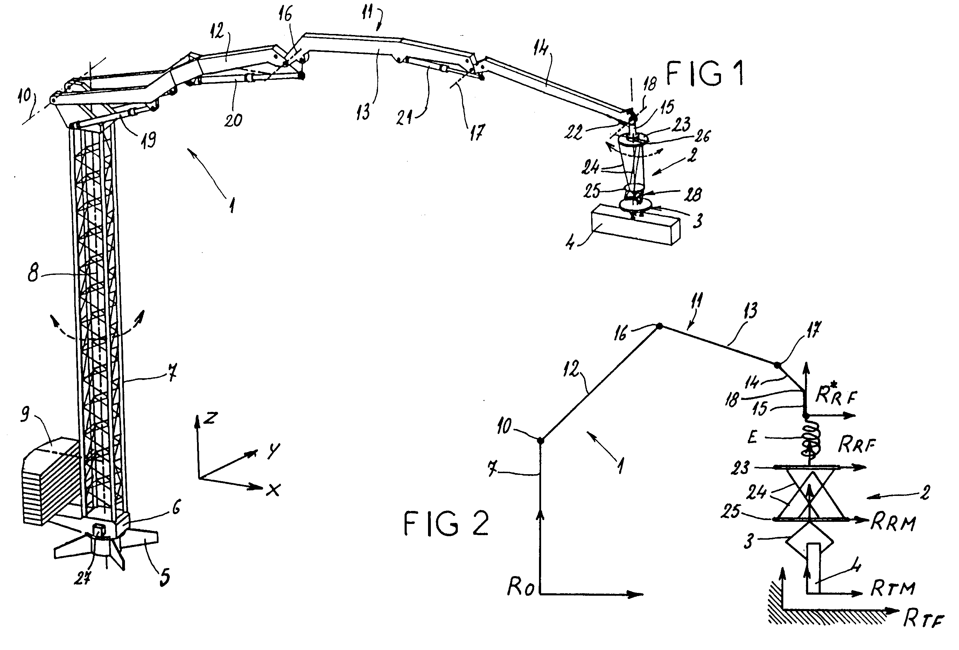

En se référant à la figure 1, on rappelle d'abord la structure d'un robot manipulateur de grande dimension et de forte capacité pour utilisation en milieu ouvert, tel que déjà décrit dans le document FR-A-2 653 761. D'une façon générale, ce robot manipulateur comprend un porteur motorisé 1 de grande dimension, à structure élancée élastiquement déformable, et un compensateur motorisé 2 à structure de faible inertie, supportant un préhenseur de charge 3 apte à saisir une charge 4.

Le porteur 1, aussi appelé macro-manipulateur, comporte un châssis fixe ou roulant 5 assurant la liaison avec le sol du chantier sur lequel le robot est installé et utilisé. Le châssis fixe ou roulant 5 supporte, par l'intermédiaire d'un dispositif d'orientation motorisé, un châssis tournant 6 sur lequel est monté un mât 7, ainsi rendu tournant autour d'un axe vertical 8. Un lest tournant d'équilibrage 9 est encore monté sur le châssis tournant 6, en arrière de la base du mât 7.

Au sommet du mât 7 est monté, autour d'un axe horizontal 10, un bras 11 dépliable et repliable, réalisé en quatre éléments successifs 12,13,14,15 articulés les uns aux autres autour d'axes horizontaux 16, 17 et 18, parallèles à l'axe 10.

La motorisation du porteur 1 est assurée par des vérins 19,20,21,22 qui assurent, respectivement, le pivotement du premier élément 12 du bras 11 par rapport au mât 7, le pivotement du deuxième élément 13 par rapport au premier élément 12, le pivotement du troisième élément 14 par rapport au deuxième élément 13, et le pivotement du quatrième élément 15 relativement au troisième élément 14, le quatrième et dernier élément 15 étant maintenu sensiblement vertical en cours de fonctionnement.

Le bras 11 du porteur 1 est prolongé, à son extrémité avant, donc sous l'élément 15, par le compensateur 2 aussi appelé micro-manipulateur. Le compensateur 2 est ici réalisé selon le principe de la plateforme de Stewart. Il comprend ainsi un plateau supérieur 23 sensiblement horizontal, relié par six vérins 24 à un plateau inférieur 25. Une liaison motorisée 26 permettant la rotation du compensateur 2, est prévue entre le dernier élément 15 du bras 11 du porteur 1, d'une part, et le plateau supérieur 23 du compensateur 2, d'autre part. Le préhenseur de charge 3 est monté sous le plateau inférieur 25 du compensateur 2.

D'une façon globale, les vérins 19,20,21,22,24 et les moto-réducteurs d'orientation constituent les "actionneurs" du robot manipulateur. Le porteur 1 avec ses divers actionneurs, y compris le moto-réducteur 27 d'orientation du mât 7, permet les déplacements de grande amplitude de la charge 4 ou du préhenseur de charge 3 à vide. Le compensateur 2 avec ses propres actionneurs (vérins 24) permet le positionnement fin de la charge 4 ou du préhenseur de charge 3, avec des mouvements plus rapides de faible amplitude, notamment lors de la prise de la charge 4 et de sa dépose. Lors de ces séquences interviennent aussi des capteurs d'efforts 28 portés par le compensateur 2, comme par exemple le capteur décrit dans le document FR-A-2631118.

Plus particulièrement, la prise ou la dépose d'une charge s'accompagne du transfert progressif du poids de la charge 4 du sol au robot manipulateur ou inversement, les actionneurs assurant alors la correction progressive de la déformée de la structure du robot manipulateur en fonction de sa charge, tandis que les capteurs d'efforts 28 permettent d'asservir à une valeur nulle les efforts horizontaux et les couples de contact. La commande hybride position/force permet de maîtriser l'ensemble porteur 1 - compensateur 2, en maintenant le préhenseur 3 en position et en compensant la déformée du porteur 1.

Sur le schéma de la figure 2, la structure du robot manipulateur apparait de façon très simplifiée (les éléments correspondant à ceux de la figure 1 étant désignés par les mêmes repères). La liaison élastique, indiquée en E entre l'extrémité du bras 11 et le compensateur 2, symbolise l'élasticité et la déformée correspondante. Ce schéma indique aussi les principaux repères orthonormés nécessaires à la mise en oeuvre de la commande hybride selon l'invention :

- repère Ro attaché à la base du porteur 1 ;0
- repère $R_{RF}$ attaché au plateau supérieur 23 du compensateur 2 (désigné $R_{RF}^{*}$ en l'absence de déformée, donc en supposant le porteur 1 rigide) ;
- repère $R_{RM}$ attaché au plateau inférieur 25 du compensateur 2 ;
- repère mobile $R_{TM}$ lié à la charge 4 ;
- repère "tâche" fixe $R_{TF}$ lié au sol ou au site de prise ou dépose de la charge 4.

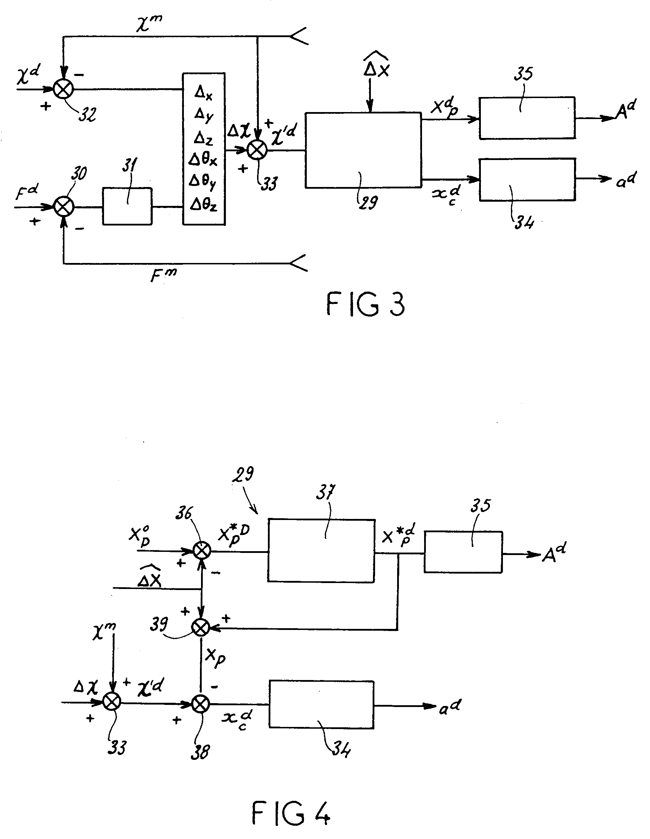

Le concept de base de la commande consiste à générer des incréments de déplacements $\Delta\chi$, dont les composantes s'expriment par $\Delta x$, $\Delta y$, $\Delta z$, $\Delta\theta x$, $\Delta\theta y$, $\Delta\theta z$ qui, additionnés à la position courante, constituent la nouvelle référence de la position à atteindre. La figure 3 illustre, sous forme de schéma de principe très simplifié, comment les commandes hybrides en force $F^d$ et en position $\chi^d$ sont combinées pour fournir un incrément de déplacement $\Delta\chi$ du préhenseur de charge 3, sans se préoccuper des mobilités autorisées pour le porteur 1 et le compensateur 2. Ce n'est qu'après avoir reconstitué la position désirée $\chi'^d$ du préhenseur de charge 3 que l'on réalise la répartition des consignes entre le porteur 1 et le compensateur 2, dans un bloc de répartition des mobilités 29 qui se trouve détaillé sur la figure 4.

Les N consignes de force $F^d$ (effort ou couple) correspondant à autant de degrés de liberté, sont introduites et comparées en 30 aux valeurs de force réelles $F^m$ fournies par les capteurs d'efforts 28 du compensateur 2. Les N valeurs d'écart de force, ainsi obtenues, sont converties en valeurs d'écart de position (translation ou orientation) en 31 où elles sont multipliées par une matrice de gain choisie approximativement comme l'inverse de la raideur du porteur 1.

Parallèlement, les (6-N) consignes de position $\chi^d$, correspondant à autant de degrés de liberté complémentaires, sont introduites et comparées en 32 aux valeurs de position réelles $\chi^m$, fournies par des capteurs extéroceptifs (externes) ; (6-N) valeurs d'écart de position sont ainsi produites.

On obtient ainsi, dans l'ensemble les six incréments de déplacements $\Delta x$, $\Delta y$, $\Delta z$, $\Delta\theta x$, $\Delta\theta y$, $\Delta\theta z$, désignés globalement par $\Delta\chi$, qui sont additionnées en 33 aux valeurs de position réelles correspondantes $\chi^m$, pour fournir de nouvelles consignes de position $\chi'^d$ du préhenseur de charge 3.

Ces nouvelles consignes de position $\chi'^d$ sont introduites dans le bloc de répartition 29, qui reçoit aussi une valeur estimée de la déformée

$$\widehat{\Delta X},$$

laquelle peut être un vecteur de dimension 3,4,5 ou 6, selon la richesse du tableau des déformées.

Le bloc de répartition 29, considéré ici globalement, délivre des consignes de position $x_c^d$ affectées au compensateur 2, et d'autres consignes de position $X_p^d$ affectées au porteur 1, ces consignes tenant compte de la déformée

$$\widehat{\Delta X}.$$

S'agissant ici de consignes de position cartésiennes, un transformateur de coordonnées 34 convertit les consignes $x_c^d$ en consignes articulaires $a^d$ destinées aux asservissements des actionneurs du compensateur 2. D'une manière similaire, un autre transformateur de coordonnées 35 convertit les consignes $X_p^d$ en consignes articulaires $A^d$ destinées aux asservissements des actionneurs du porteur 1. Les deux transformateurs de coordonnées 34 et 35 prennent en compte, respectivement, le modèle géométrique inverse du compensateur 2 et le modèle géométrique inverse du porteur 1.

Il est maintenant fait référence à la figure 4, pour l'explication plus détaillée de la répartition des mobilités entre le porteur 1 et le compensateur 2, tenant compte de ce que tous les degrés de liberté ne sont pas autorisés pour le porteur 1. En particulier, le plan vertical du porteur 1 peut être maintenu bloqué en phase de commande hybride, et toute inclinaison du porteur autour d'un axe quelconque situé dans le plan horizontal x y peut aussi être impossible. Il est rappelé qu'en phase de commande hybride, la stratégie retenue consiste à faire exécuter par le micro-manipulateur, à savoir ici le compensateur 2, les déplacements correctifs destinés à annuler les écarts d'asservissement des consignes hybrides (force et position), tout en corrigeant de manière indépendante la position du macro-manipulateur, autrement dit du porteur 1, en tenant compte de la déformée

$$\widehat{\Delta X}.$$

Dans le cas le plus général, on peut ici supposer que la déformée

$$\widehat{\Delta X}$$

est exprimée par un vecteur à six composantes. A chaque pas de calcul, la nouvelle référence de position, résultant de l'estimation de la déformée, doit tenir compte des mobilités autorisées pour le porteur 1. Il est donc nécessaire de projeter cette référence dans le sous-espace de travail du porteur 1, et il reste à faire prendre en charge la partie manquante (sous-espace complémentaire) par le compensateur 2.

Ce mode opératoire est schématisé sur la figure 4, où :

- $X_p^{\circ}$ représente la position du porteur 1, autrement dit la position de l'extrémité du bras 11 (ou du plateau supérieur 23 du compensateur 2), que l'on souhaite ici maintenir constante durant toute la durée d'exécution de la macro-commande de type hybride ;

- $X_p^{*\,D}$ représente la position souhaitée pour le porteur 1 supposé rigide, cette consigne de position "virtuelle" tenant compte de la déformée

$$\widehat{\Delta X},$$

qui est soustraite en 36 de la position $X_p^{\circ}$ ;
- 37 indique l'opération de projection de la consigne $X_p^{*\,D}$ dans le sous-espace de travail du porteur 1, tenant compte des mobilités autorisées ;
- $X_p^{*\,d}$ représente le résultat de cette opération de projection, c'est-à-dire la consigne de position affectée réellement au porteur 1, et exploitable par les actionneurs de ce porteur, après traduction en consignes articulaires $A^d$ par le transformateur de coordonnées 35 ;
- $x_c^d$ représente la consigne de position affectée au conpensateur 2, c'est-à-dire la partie que le compensateur 2 devra prendre en charge, par déplacement de son plateau secondaire 25 relativement à son plateau primaire 23 ;
- Xp représente la position de l'extrémité du porteur 1, qui est soustraite en 38 de la consigne $\chi'^d$ pour former la consigne $x_c^d$ affectée au compensateur 2 ; soit :

$$x^d_{\ c} = \chi'^{\,d} - Xp.$$

- 39 désigne une opération de sommation, fournissant une estimation de la grandeur Xp à partir de la position $X_p^{*\,d}$ du porteur 1 supposé rigide, corrigée par la déformée

$$\widehat{\Delta X},$$

soit :

$$Xp = X_p^{*\,d} + \widehat{\Delta X}.$$

De cette manière, les consignes non admissibles par le porteur 1 sont adressées au compensateur 2, et elles se retrouvent dans les consignes cartésiennes $x_c^d$ finalement traduites en consignes articulaires $a^d$ comme déjà décrit plus haut.

Alors que la description qui vient d'être donnée pour la répartition des mobilités part d'une position désirée constante $X_p^{\circ}$ du porteur 1, une variante de mise en oeuvre du procédé consiste à réajuster la position du porteur 1 au cours d'une séquence de prise ou de dépose de charge, pour réduire l'écart entre la position réelle du compensateur 2 et sa position médiane.

Bien entendu, l'invention ne se limite pas aux seuls modes de mise en oeuvre de ce procédé de commande hybride position/force qui ont été décrits ci-dessus, à titre d'exemples ; elle en embrasse, au contraire, toutes les variantes de réalisation et d'application respectant le même principe. Ainsi, l'on ne s'éloignerait pas du cadre de l'invention par des modifications partielles du procédé restant dans le cadre des équivalents techniques, ou par une application de ce procédé à des robots manipulateurs autres que l'exemple particulier ici décrit, à condition que ces robots conservent une structure avec macro-manipulateur, micro-manipulateur et préhenseur de charge.

## Revendications

1. Procédé de commande hybride position/force pour robot manipulateur à six degrés de liberté du type comprenant un macro-manipulateur (1) couplé à un micro-manipulateur (2) avec préhenseur de charge (3), ces manipulateurs mettant en oeuvre des capteurs de force et de position, des actionneurs et des moyens d'asservissement des actionneurs à partir de consignes et de valeurs réelles fournies par les capteurs, procédé <u>caractérisé en ce que</u> :

   - on introduit N consignes ($F^d$) de force de contact du préhenseur (3) ou de la charge (4) avec l'environnement et (6-N) consignes de position ($\chi^d$) du préhenseur (3), correspondant respectivement aux six degrés de liberté de l'espace,
   - toutes ces consignes ($F^d$, $\chi^d$) sont comparées (en 30,32) à des valeurs réelles ($F^m$, $\chi^m$) fournies par des capteurs respectifs de force (28) et de position, et produisent ainsi des valeurs d'écart,
   - les valeurs d'écart sont traduites (en 31) en incréments de déplacement ($\Delta x$, $\Delta y$, $\Delta z$, $\Delta \theta x$, $\Delta \theta y$, $\Delta \theta z$) destinés au préhenseur de charge (3),
   - les incréments de déplacement sont additionnés (en 33) à des valeurs ($\chi^m$) représentatives de la position actuelle, pour constituer de nouvelles consignes de position ($\chi'^d$) du préhenseur de charge (3),
   - les nouvelles consignes de position ($\chi'^d$) du préhenseur de charge (3), en tenant compte (en 29) de la position réelle (Xp) du macro-manipulateur (1) et de sa déformée

$$(\widehat{\Delta X}),$$

   sont affectées au micro-manipulateur (2),
   - ces nouvelles consignes de position ($x_c^d$) sont traduites, par un transformateur de coordonnées (34), en consignes articulaires ($a^d$) destinées aux asservissements des actionneurs (24) du micro-manipulateur (2),
   - des consignes de position virtuelles ($X_p^{*\,D}$)

tenant compte de la déformée

$$(\widehat{\Delta x})$$

et de la position initiale ($X_p^{\,\circ}$) du macro-manipulateur (1), sont adressées au macro-manipulateur (1),

- ces consignes virtuelles ($X_p^{*\,D}$) sont réparties (en 37) en consignes de position ($X_p^{*\,d}$) effectivement adressées au macro-manipulateur (1), d'une part, et en consignes non réalisables par le macro-manipulateur (1) qui sont adressées au micro-manipulateur (2), d'autre part,

- les consignes de position ($X_p^{*\,d}$) effectivement adressées au macro-manipulateur (1) sont traduites, par un transformateur de coordonnées (35), en consignes articulaires ($A^d$) destinées aux asservissements des actionneurs (19,20,21,22,26,27) du macro-manipulateur (1).

2. Procédé de commande hybride position/force pour robot manipulateur selon la revendication 1, caractérisé en ce que les consignes ($X_p^{\,\circ}$) adressées au macro-manipulateur (1) sont établies de telle sorte que le macro-manipulateur (1) occupe une position constante dans l'espace, au cours d'une séquence de prise ou de dépose d'une charge (4).

3. Procédé de commande hybride position/force pour robot manipulateur selon la revendication 1, caractérisé en ce que les consignes ($X_p^{\,\circ}$) adressées au macro-manipulateur (1) sont établies de telle sorte que le macro-manipulateur (1) occupe une position réajustable, au cours d'une séquence de prise ou de dépose d'une charge (4), de manière à réduire l'écart entre la position réelle et la position médiane du micro-manipulateur (2).

4. Procédé de commande hybride position/force pour robot manipulateur selon l'une quelconque des revendications 1 à 3, caractérisé en ce que les consignes de position ($x_c^{\,d}$), affectées au micro-manipulateur (2) résultent d' une soustraction (en 38), aux consignes de position ($\chi'^d$) du préhenseur de charge (3), d'une grandeur ($X_p$) représentant la position réelle du macro-manipulateur (1), cette grandeur ($X_p$) étant elle-même estimée à partir de la position ($X_p^{*\,d}$) du macro-manipulateur (1) supposé rigide, corrigée (en 39) par la déformée

$$(\widehat{\Delta x}).$$

5. Procédé de commande hybride position/force pour robot manipulateur selon l'une quelconque des revendications 1 à 4, caractérisé par son application à un robot manipulateur de grande dimension et de forte capacité pour utilisation en milieu ouvert, avec porteur motorisé (1), constitué d'un mât orientable (7) et d'un bras dépliable (11) en plusieurs éléments (12,13,14,15) articulés les uns aux autres, et avec, à l'extrémité du bras dépliable (11), un compensateur motorisé (2) équipé d'un porte-préhenseur à détection d'efforts à compliance active, dans lequel le porteur (1) constitue le macro-manipulateur et le compensateur (2) constitue le micro-manipulateur, le procédé assurant la répartition des mobilités entre le porteur (1) et le compensateur (2), en contrôlant les efforts de contact au cours des opérations de prise et de dépose d'une charge (4).

## Claims

1. Method of hybrid position/force control for a robotic manipulator with six degrees of freedom of the type comprising a macro-manipulator (1) coupled with a micro-manipulator (2) with a load gripper (3), these manipulators using force and position sensors, actuators and means of controlling the actuators on the basis of reference values and actual values supplied by the sensors, a method <u>characterised in that</u>:

- N reference values ($F^d$) are introduced for the force of the contact between the gripper (3) or of the load (4) with the environment and (6-N) position reference values ($X^d$) for the gripper (3), corresponding respectively to the six spatial degrees of freedom,

- all these reference values ($F^d$, $X^d$) are compared (at 30, 32) with actual values ($F^m$, $X^m$) supplied by respective sensors of force (28) and position, and thereby produce difference values,

- the difference values are translated (at 31) into movement increments ($\Delta x$, $\Delta y$, $\Delta z$, $\Delta \theta x$, $\Delta \theta y$, $\Delta \theta z$) for the load gripper (3),

- the movement increments are added (at 33) to values ($X^m$) representing the current position, to form new position reference values ($X'^d$) for the load gripper (3),

- the new position reference values ($X'^d$) for the load gripper (3), taking account (at 29) of the actual position ($X_p$) of the macro-manipulator (1) and its elastic curve

$$(\widehat{\Delta x}),$$

are assigned to the micro-manipulator (2),

- these new position reference values ($x^d_c$) are translated, by a coordinate transformer (34), into articulation reference values ($a^d$) for the control of the actuators (24) of the micro-manipulator (2),

- virtual position reference values ($X_p^{*D}$) taking account of the elastic curve

$$(\widehat{\Delta X})$$

and of the initial position ($X^o_p$) of the macro-manipulator (1), are sent to the macro-manipulator (1),

- these virtual reference values ($X_p^{*D}$) are divided (at 37) into position reference values ($X_p^{*d}$) actually sent to the macro-manipulator (1), on the one hand, and into reference values not able to be performed by the macro-manipulator (1), which are sent to the micro-manipulator (2), on the other hand,

- the position reference values ($X_p^{*d}$) actually sent to the macro-manipulator (1) are translated, by a coordinate transformer (35), into articulation reference values ($A^d$) for the controls of the actuators (19, 20, 21, 22, 26, 27) of the macro-manipulator (1).

2. Method of hybrid position/force control for a robotic manipulator according to Claim 1, characterised in that the reference values ($X^o_p$) sent to the macro-manipulator (1) are established in such a way that the macro-manipulator (1) occupies a constant position in space, during a sequence of taking and depositing a load (4).

3. Method of hybrid position/force control for a robotic manipulator according to Claim 1, characterised in that the reference values ($X^o_p$) sent to the macro-manipulator (1) are established in such a way that the macro-manipulator (1) occupies a readjustable position, during a sequence of taking and depositing a load (4), so as to reduce the difference between the actual position and the median position of the micro-manipulator (2).

4. Method of hybrid position/force control for a robotic manipulator according to any one of Claims 1 to 3, characterised in that the position reference values ($x^d_c$) allocated to the micro-manipulator (2) are the result of a subtraction (at 38), from the position reference values ($X^d$) of the load gripper (3), of a quantity ($Xp$) representing the actual position of the macro-manipulator (1), this quantity ($Xp$) itself being estimated on the basis of the position ($X_p^{*d}$) of the macro-manipulator (1) assumed to be rigid, corrected (at 39) by the elastic curve

$$(\widehat{\Delta X}).$$

5. Method of hybrid position/force control for a robotic manipulator according to any one of Claims 1 to 4, characterised by its application to a large, high-capacity robotic manipulator for use in an open environment, with a motorised carrier (1), consisting of a directable mast (7) and an arm (11) able to be unfolded into several elements (12, 13, 14, 15) articulated on each other, and with, at the end of the unfoldable arm (11), a motorised compensator (2) equipped with a gripper carrier able to detect active-compliance forces, in which the carrier (1) forms the macro-manipulator and the compensator (2) forms the micro-manipulator, the method distributing the mobilities between the carrier (1) and the compensator (2), whilst controlling the contact forces during operations of taking and depositing a load (4).

**Patentansprüche**

1. Verfahren zur hybriden Positions-/ Kraft- Steuerung für einen Roboter-Manipulator mit sechs Freiheitsgraden eines Typs, enthaltend einen Makro- Manipulator (1) verbunden mit einem Mikro- Manipulator (2) mit einem Greiforgan (3) für eine Last, diese Manipulatoren einsetzend Aufnehmer für die Kraft und die Position, Wirkelemente und Mittel zur Regelung der Wirkelemente ausgehend von Sollwerten und realen Werten, die durch die Aufnehmer geliefert werden,
vorstehendes **gekennzeichnet** durch

- zu Anfang N Sollwerte ($F^d$) für die Kraft der Berührung des Greiforgans (3) oder der Last (4) mit der Umgebung und (6 - N) Sollwerte für die Position ($\chi^d$) des Greiforgans (3), entsprechend korrespondierend mit sechs Freiheitsgraden im Raum,

- alle diese Sollwerte ($F^d$, $\chi^d$) werden verglichen (in 30, 32) mit den realen Werten ($F^m$, $\chi^m$), die durch die Aufnehmer jeweils für die Kraft (28) und die Position geliefert werden, und auf diese Weise Differenzwerte produzierend,

- die Differenzwerte werden (in 31) in Inkremente der Verschiebung ($\Delta x$, $\Delta y$, $\Delta z$, $\Delta \Theta x$, $\Delta \Theta y$, $\Delta \Theta z$) umgesetzt entsprechend dem Greiforgan (3) der Last,

- die Inkremente der Verschiebung werden (in 33) zu den Werten ($\chi^m$) addiert, die die aktuelle Position repräsentieren, zur Erstellung neuer Sollwerte für die Position ($\chi^{'d}$) des Greiforgans (3) der Last

- die neuen Sollwerte der Position ($\chi^{'d}$) des Greiforgans (3) der Last, unter Berücksichtigung (in 29) der realen Position ($X_p$) des Makro-Manipulators (1) und von seiner Verformung

$$(\widehat{\Delta X}),$$

werden beeinflußt von dem Mikro- Manipulator (2),

- diese neuen Sollwerte der Position ($x^d_c$) werden durch einen Koordinaten- Transformator (34) in Gelenk- Sollwerte ($a^d$) umgewandelt, die zur Regelung der Wirkelemente (24) des Mikro-Manipulators (2) bestimmt sind,

- die Sollwerte der virtuellen Positionen ($X^{*}_p{}^D$) unter Berücksichtigung der Deformation

$$(\widehat{\Delta X})$$

und der anfänglichen Position ($X^o_p$) des Makro-Manipulators (1) werden an den Makro- Manipulator (1) weitergeleitet,

- diese virtuellen Sollwerte ($X^{*}_p{}^D$) werden (in 37) aufgeteilt einerseits in Sollwerte der für den Makro- Manipulator (1) bestimmten tatsächlichen Position ($X^{*}_p{}^d$), und andererseits in mittels des Makro- Manipulators (1) nicht realisierbare Sollwerte, die für den Mikro- Manipulator (2) bestimmt sind,

- die für den Makro- Manipulator (1) bestimmten Sollwerte der Position ($X^{*}_p{}^d$) werden durch einen Koordinaten- Transformator (35) in Gelenk-Sollwerte ($A^d$) umgewandelt, die zur Regelung der Wirkelemente (19, 20, 21, 22, 26, 27) des Makro- Manipulators (1) bestimmt sind.

2. Verfahren zur hybriden Positions-/ Kraft- Steuerung für einen Robotermanipulator gemäß Anspruch 1, **dadurch gekennzeichnet, daß** die Sollwerte ($X^o_p$), die für den Makro- Manipulator (1) bestimmt sind, auf eine solche Art gebildet werden, daß der Makro- Manipulator (1) eine konstante Position im Raum im Laufe einer Sequenz des Aufnehmens oder des Ablegens einer Last (4) einnimmt.

3. Verfahren zur hybriden Positions-/ Kraft- Steuerung für einen Robotermanipulator gemäß Anspruch 1, **dadurch gekennzeichnet, daß** die Sollwerte ($X^o_p$), die für den Makro- Manipulator (1) bestimmt sind, auf eine solche Art gebildet werden, daß der Makro- Manipulator (1) eine nachregelbare Position im Raum im Laufe einer Sequenz des Aufnehmens oder des Ablegens einer Last (4) einnimmt, zum Zwecke einer Reduzierung der Abweichung zwischen der realen Position und der mittleren Position des Mikro- Manipulators (2).

4. Verfahren zur hybriden Positions-/ Kraft- Steuerung für einen Robotermanipulator gemäß irgendeinem der Ansprüche 1 bis 3, **dadurch gekennzeichnet, daß** die Sollwerte der Position ($x^d_c$), die durch den Mikro- Manipulator (2) beeinflußt werden, aus einer Substraktion (in 38) resultieren, aus Sollwerten der Position ($\chi^{'d}$) des Greiforgans (3) der Last, einer Größe ($X_p$), repräsentierend die reale Position des Makro- Manipulators (1), wobei diese Größe ($X_p$) ihrerseits abhängig von der Position ($X_p{}^d$) des als starr angenommenen Makro- Manipulators (1) geschätzt wird, korrigiert (in 39) durch die Deformation

$$(\widehat{\Delta X}).$$

5. Verfahren zur hybriden Positions-/ Kraft- Steuerung für einen Robotermanipulator gemäß irgendeinem der Ansprüche 1 bis 4, **gekennzeichnet, durch** seinen Einsatz bei einem Roboter- Manipulator großer Abmessungen und großer Leistungsfähigkeit zum Einsatz in offenem Gelände, mit motorisierten Trägern (1), gebildet durch einen drehbaren Mast (7) und einen faltbaren Ausleger (11) aus mehreren Elementen (12, 13, 14, 15), jeweils aneinander angelenkt und mit, am Ende des faltbaren Auslegers (11), einem motorisierten Kompensator (2), ausgestattet mit einem Trage- Greiforgan zum Erkennen von Belastungskräften durch aktive Compliance, in der der Träger (1) den Makro- Manipulator und der Kompensator (2) den Mikro-Manipulator bildet, das Vorstehende sicherstellend die Aufteilung der Beweglichkeit zwischen dem Träger (1) und dem Kompensator (2), kontrollierend die Belastungskräfte des Kontaktes im Laufe von Operationen des Aufnehmens oder des Ablegens einer Last (4).

FIG 1

FIG 2

EP 0 608 187 B1

FIG 3

FIG 4

11